# FASCICULE DE BREVET EUROPEEN

(11) **EP 2 294 284 B1**
(45) Date de publication et mention de la délivrance du brevet: **28.12.2011**
(21) Numéro de dépôt: 09754059.5
(22) Date de dépôt: 27.04.2009
(51) Int. Cl.: F01D 5/02, F01D 5/06, F01D 25/24

(54) **BRIDE ANNULAIRE DE FIXATION D'UN ELEMENT DE ROTOR OU DE STATOR**
RINGFÖRMIGER FLANSCH ZUR BEFESTIGUNG EINES ROTOR- ODER STATORELEMENTS
ANNULAR FLANGE FOR ATTACHING A ROTOR OR STATOR ELEMENT

(30) Priorité: 29.05.2008 FR 0802918
(43) Date de publication de la demande: 16.03.2011
(73) Titulaire: Snecma, 75015 Paris (FR)
(72) Inventeur: BELMONTE, Olivier, 77930 Perthes-en-Gatinais (FR); GILLANT, Grégory, Nicolas, Gérald, 91540 Mennecy (FR)
(74) Mandataire: Ramey, Daniel
(86) Numéro de dépôt international: PCT/FR2009/000491
(87) Numéro de publication internationale: WO 2009/144409

(56) Documents cités:
- EP-A- 1 445 422
- EP-A- 1 496 266
- EP-A- 1 717 415
- DE-A1- 3 532 929

## Description

L'invention se rapporte à des brides annulaires de fixation d'éléments de rotor ou de stator, ainsi qu'à une turbomachine comprenant un assemblage de telles brides.

Dans une turbomachine, les disques de rotor (de turbine par exemple) sont reliés entre eux par des brides annulaires à leur périphérie radialement interne, ces brides étant appliquées les unes sur les autres et fixées ensemble par boulonnage.

D'autres éléments, tels que des supports de pistes annulaires de matériau abradable, peuvent aussi comporter à leur périphérie interne des brides annulaires, qui sont serrées entre deux brides annuaires de disques de rotor et fixées par les mêmes boulons que les disques de rotor.

Ces brides annulaires sont en général festonnées c'est-à-dire comportent une alternance de parties pleines et de parties creuses pour réduire leur masse. Les trous de passage des boulons de fixation sont formés dans les parties pleines.

Pour l'assemblage de plusieurs brides empilées, il faut que les trous de passage formés dans les parties pleines des brides soient tous alignés pour éviter que les parties creuses d'une des brides soient décalées angulairement et se retrouvent alignées avec les trous de passage de boulons formés dans les parties pleines des autres brides, car alors cette bride serait, non pas fixée aux autres brides par les boulons, mais seulement serrée entre deux autres brides et pourrait s'échapper en fonctionnement, avec des conséquences graves.

Le document EP 1 717 415 A1 décrit un assemblage de plusieurs brides entre elles avec un moyen de détrompage de l'art antérieur.

L'invention a notamment pour but d'éviter ces inconvénients de façon simple, efficace et économique.

Elle propose à cet effet, un assemblage d'éléments de rotor ou de stator d'une turbomachine comprenant au moins deux brides annulaires radiales comprenant sur une périphérie interne ou externe une alternance de parties pleines et de parties creuses, les parties pleines comportant des orifices de passage de boulons de fixation d'une bride sur l'autre bride, caractérisée en ce qu'au moins l'une des brides comprend des moyens de détrompage angulaire constitués par le fond d'au moins une partie creuse de la périphérie interne (ou externe, respectivement) dont le rayon par rapport à l'axe de la turbomachine est inférieur (ou supérieur, respectivement) au rayon d'un cercle tangent extérieurement (ou intérieurement, respectivement) aux orifices de passage de boulons des parties pleines, afin de s'opposer au passage d'un boulon de fixation dans cette partie creuse et d'assurer la fixation de la bride sur une autre bride dans une position angulaire correcte.

Selon l'invention, lorsqu'une bride est décalée angulairement de telle manière que ses orifices ne sont pas alignés avec les orifices des autres brides, les moyens de détrompage permettent qu'au moins le fond d'une partie creuse de cette bride soit situé sur le passage d'au moins un boulon de fixation et empêche son insertion dans les orifices des autres brides, évitant ainsi tout risque de mauvais montage de cette bride.

Selon une autre caractéristique de l'invention, le fond précité de rayon inférieur (ou supérieur, respectivement) s'étend sur tout l'intervalle entre deux parties pleines.

Afin de limiter l'augmentation de masse engendrée par la modification du rayon d'au moins une partie creuse de la bride, il est suffisant que le rayon du fond d'au moins une partie creuse soit compris entre le rayon d'un cercle tangent intérieurement aux orifices des parties pleines et le rayon d'un cercle tangent extérieurement aux orifices des parties pleines.

Avantageusement, le rayon du fond d'au moins une partie creuse est inférieur (ou supérieur, respectivement) d'environ 10% au rayon du cercle tangent extérieurement (ou intérieurement, respectivement) aux orifices des parties pleines.

Dans un mode de réalisation particulier de l'invention, la bride comprend un seul fond de partie creuse ayant un rayon déterminé tel que décrit ci-dessus, le balourd créé par ce fond de partie creuse étant rattrapé par usinage d'un cordon d'équilibrage en rotation formé sur la bride.

Dans une variante de l'invention, la bride comprend plusieurs fonds de partie creuse ayant un rayon déterminé tel que décrit ci-dessus, ces fonds étant régulièrement répartis sur la circonférence interne ou externe de la bride, ce qui ne génère pas de balourd en rotation et ne nécessite pas l'utilisation d'un cordon d'équilibrage.

L'invention concerne encore une turbomachine, telle qu'un turboréacteur ou un turbopropulseur, caractérisée en ce qu'elle comprend un assemblage d'éléments de rotor ou de stator tel que décrit ci-dessus.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique partielle en coupe axiale d'une turbine basse-pression ;
- la figure 2 est une vue schématique agrandie et en perspective de la zone délimitée en pointillés sur la figure 1, et dans laquelle une bride annulaire est correctement fixée entre deux autres brides annulaires ;
- la figure 3 est une vue schématique en perspective identique à la figure 2 dans laquelle une bride annulaire est angulairement décalée entre deux autres brides annulaires ;
- La figure 4 est une vue schématique partielle de face d'une bride annulaire radiale selon l'invention, illustrant un positionnement angulaire correct ;
- La figure 5 est une vue schématique partielle de face d'une bride annulaire radiale selon l'invention, illustrant un positionnement angulaire incorrect ;
- La figure 6 est une vue schématique partielle de face d'une autre mode de réalisation d'une bride annulaire radiale selon l'invention.

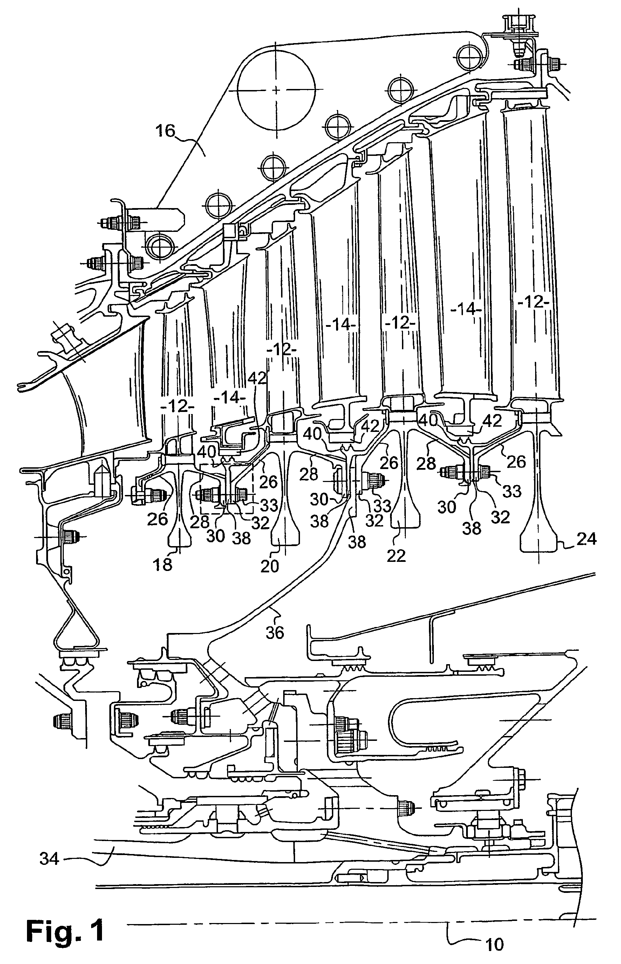

On se réfère d'abord à la figure 1 qui représente un rotor de turbine basse-pression d'axe 10 comprenant une alternance d'aubes mobiles 12 et d'aubes fixes 14 logées dans un carter externe 16. Les extrémités radialement internes des aubes mobiles 12 sont fixées à la périphérie externe de disques 18, 20, 22, 24 de rotor. Chaque disque 18, 20, 22, 24 comprend à sa périphérie externe des parois tronconiques amont 26 et aval 28 de liaison aux autres disques au moyen de brides annulaires 30, 32 s'étendant radialement vers l'intérieur et fixées l'une à l'autre par des boulons 33. L'ensemble de disques est relié à un arbre de turbine 34 par l'intermédiaire d'un cône d'entraînement 36 comprenant une bride annulaire 38 serrée entre les brides annulaires 30, 32 des disques 20 et 22.

Afin d'éviter une circulation d'air parasite entre la périphérie interne d'une rangée d'aubes fixes 14 et les parois tronconiques aval 28 et amont 26 des disques, une bride annulaire radiale 38 portant à sa périphérie externe un joint à labyrinthe 40 est intercalée entre les brides radiales 30, 32 des parois tronconiques aval 28 et amont 26 des disques, le joint à labyrinthe 40 coopérant avec une piste de matériau abradable 42 montée sur la périphérie interne d'une rangée d'aubes fixes 14.

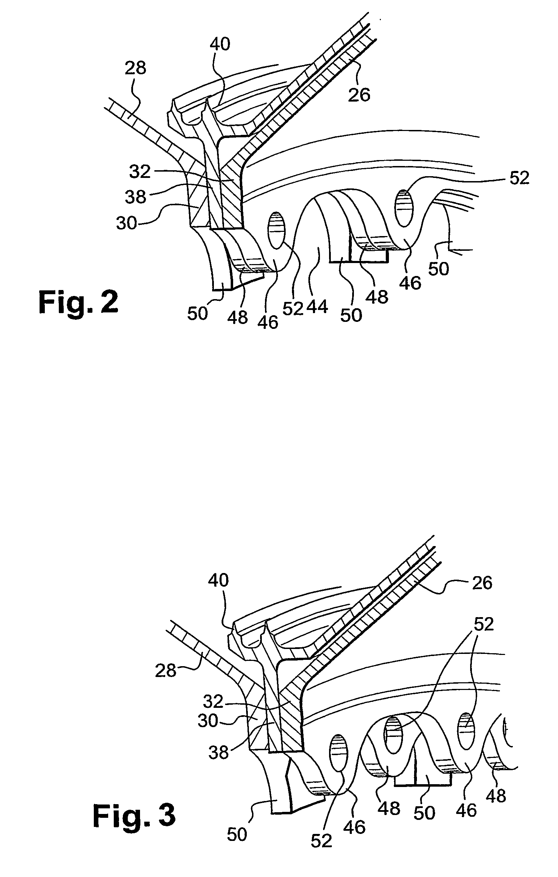

Comme représenté en figure 2, les brides annulaires radiales 30, 32 des parois tronconiques amont 26 et aval 28 et la bride radiale 38 d'un joint à labyrinthe 40 sont festonnées et comprennent une alternance de parties creuses 44 et de parties pleines 46, 48, 50, respectivement, les parties pleines 46, 48, 50 comportant des orifices 52 destinés à recevoir des boulons de fixation permettant de solidariser ensemble les brides annulaires des parois tronconiques amont 26 et aval 28 et la bride annulaire 38 du joint à labyrinthe 40.

Cependant, lors de la mise en place de la bride annulaire 38 du joint à labyrinthe 40 entre les brides annulaires des parois tronconiques amont 26 et aval 28, un décalage angulaire de la bride annulaire 38 est possible, ce qui conduit à ce que les parties pleines 46, 50 des brides annulaires 30, 32 des parois tronconiques amont 26 et aval 28 soient axialement alignées et que les parties pleines 48 de la bride annulaire 38 du joint à labyrinthe 40 soient alignées axialement avec les parties creuses 44 des brides annulaires 30, 32 des parois tronconiques amont 26 et aval 28 (figure 3). Un tel positionnement conduit à ce que les boulons de fixation insérés dans les orifices 52 des brides 30, 32 des parois tronconiques amont 26 et aval 28 ne soient pas insérés dans les orifices 52 de la bride 38 du joint à labyrinthe 40. Ainsi, la bride 38 du joint à labyrinthe 40 n'est maintenue en position que par le serrage des brides 30, 32 des parois tronconiques 26, 28 et n'est pas tenue par les boulons de fixation.

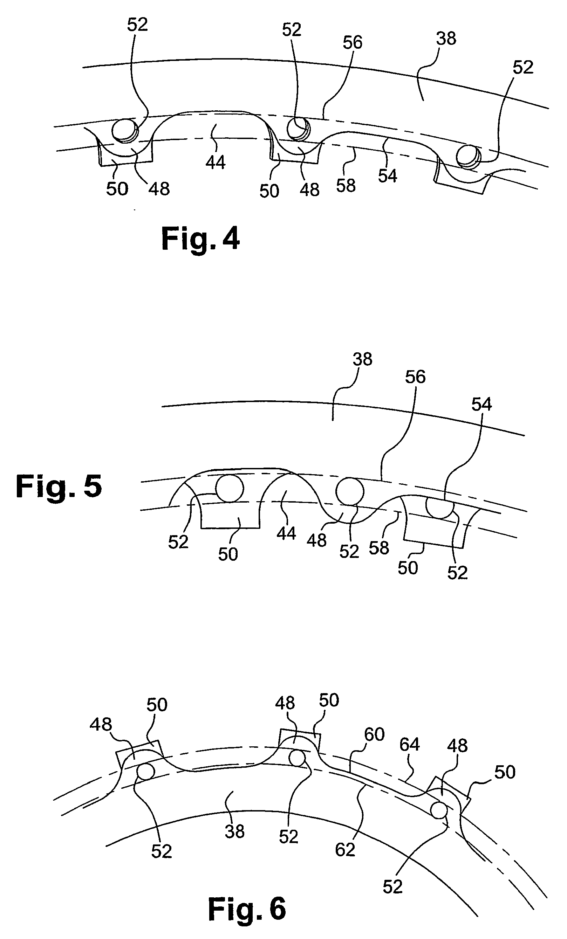

Selon l'invention, ces inconvénients ainsi que ceux mentionnés précédemment, sont évités grâce au fait que, comme représenté en figure 4, la bride comprend des moyens de détrompage angulaire pour son assemblage à d'autres brides, ces moyens étant constitués par le fond 54 d'au moins une partie creuse 44 de la bride 38 du joint a labyrinthe 40 a un rayon par rapport à l'axe de la turbomachine 10 qui est inférieur au rayon d'un cercle 56 tangent extérieurement aux orifices 52 des parties pleines 48.

Lors du montage de la bride 38 du joint à labyrinthe 40 entre les brides annulaires 30, 32 avec un décalage angulaire tel que ses parties creuses 44 sont alignées axialement avec les parties pleines 46, 50 des brides 30, 32, l'insertion de boulons de fixation dans les orifices 52 des parties pleines 46, 50 des brides 30, 32 des parois tronconiques amont 26 et aval 28 est rendu impossible, puisque le fond 54 d'au moins une partie creuse 44 est situé sur le passage d'un boulon (figure 5). Ainsi, une seule partie creuse 44, dont le rayon est déterminé selon l'invention, est suffisante pour garantir un montage correct.

Préférentiellement, le rayon du fond d'au moins une partie creuse 44 est compris entre le rayon du cercle 56 tangent extérieurement aux orifices 52 des parties pleines 48 et le rayon d'un cercle 58 tangent intérieurement à ces mêmes orifices (figure 4). En effet, il suffit que le fond d'au moins une partie creuse 44 soit compris entre ces deux cercles pour éviter un montage incorrect de la bride radiale 38 du joint à labyrinthe 40.

Dans un mode de réalisation préféré de l'invention, le rayon du fond d'au moins une partie creuse 44 est inférieur d'environ 10% au rayon du cercle tangent extérieurement aux orifices des parties pleines, ce qui est suffisant pour compenser l'effet des tolérances de fabrication de la bride et du positionnement des orifices au niveau des parties pleines de la bride et ainsi de toujours assurer un détrompage angulaire.

Dans une variante de l'invention représentée en figure 6, les festonnages des brides sont formés à leur périphérie extérieure. Dans ce cas, le fond 60 d'au moins une partie creuse 44 d'une bride a un rayon qui est supérieur au rayon du cercle 62 tangent intérieurement aux orifices 52 de passage de boulons des parties pleines 48.

De manière similaire au cas où les festonnages sont formés en périphérie interne de la bride 38, il est préférable que le rayon du fond 60 d'au moins une partie creuse 44 soit compris entre le rayon du cercle 62 tangent intérieurement aux orifices 52 des parties pleines 48 et le rayon d'un cercle 64 tangent extérieurement à ces mêmes orifices (figure 6).

Avantageusement, le rayon du fond 60 d'au moins une partie creuse 44 est supérieur d'environ 10% au rayon du cercle 62 tangent intérieurement aux orifices 52 des parties pleines 48.

Dans le mode de réalisation où la bride annulaire 38 comprend un seul fond 54, 60 de partie creuse 44 ayant un rayon déterminé tel que décrit précédemment, un cordon d'équilibrage est réalisé sur le pourtour de la bride 38 afin de compenser par usinage le balourd créé en rotation par l'unique fond 54, 60 de partie creuse 44.

La bride annulaire 38 peut comprendre plusieurs parties creuses 44 ayant un rayon tel que déterminé ci-dessus et réparties régulièrement sur la périphérie interne ou externe de la bride selon que les festonnages sont situés radialement à l'intérieur ou à l'extérieur de la bride. Dans ce cas, il n'est pas nécessaire de prévoir un cordon d'équilibrage car la répartition régulière des fonds 54, 60 de parties creuses 44 à rayon selon l'invention ne génère pas de balourd.

L'invention peut également s'appliquer à des assemblages de plus de trois brides. De manière plus générale, afin de garantir un assemblage correct de n éléments de rotor ou de stator il suffit que n-1 de ces éléments comprennent chacun une bride radiale ayant au moins un fond 54, 60 de partie creuse dont le rayon est déterminé tel que précédemment.

La réalisation d'un fond 54, 60 de partie creuse 44 ayant un rayon déterminé tel que décrit précédemment est simple car il suffit de diminuer la profondeur d'usinage pour une partie creuse 44 de la bride 38. De plus, ce fond 54, 60 peut servir de repère angulaire pour positionner la bride.

L'invention est applicable chaque fois que des brides annulaires festonnées sont fixées ensemble par boulonnage, en particulier dans une turbomachine.

## Revendications

1. Assemblage d'éléments de rotor ou de stator d'une turbomachine, comprenant au moins deux brides annulaires radiales comprenant sur une périphérie interne ou externe une alternance de parties pleines (48) et de parties creuses (44), les parties pleines (48) comportant des orifices (52) de passage de boulons de fixation d'une bride sur l'autre bride, **caractérisée en ce qu'**au moins l'une des brides comprend des moyens de détrompage angulaire constitués par le fond (54, 60) d'au moins une partie creuse (44) de la périphérie interne, ou externe, respectivement, dont le rayon par rapport à l'axe de la turbomachine (10) est inférieur, ou supérieur, respectivement, au rayon d'un cercle (56, 62) tangent extérieurement, ou intérieurement, respectivement, aux orifices (52) de passage de boulons des parties pleines (48), afin de s'opposer au passage d'un boulon de fixation dans cette partie creuse et d'assurer la fixation de la bride sur une autre bride dans une position angulaire correcte.

2. Assemblage selon la revendication 1, **caractérisée en ce que** le fond (54, 60) de rayon inférieur, ou supérieur, respectivement, s'étend sur tout l'intervalle entre deux parties pleines (48).

3. Assemblage selon la revendication 1 ou 2, **caractérisée en ce que** le rayon du fond (54, 60) d'au moins une partie creuse est compris entre le rayon d'un cercle (58, 62) tangent intérieurement aux orifices (52) des parties pleines (48) et le rayon d'un cercle (56, 64) tangent extérieurement aux orifices (52) des parties pleines (48).

4. Assemblage selon l'une des revendications 1 à 3, **caractérisée en ce que** le rayon du fond (54, 60) d'au moins une partie creuse (44) est inférieur, ou supérieur, respectivement, d'environ 10% au rayon du cercle (56, 62) tangent extérieurement, ou intérieurement, respectivement, aux orifices (52) des parties pleines (48).

5. Assemblage selon l'une des revendications 1 à 4, **caractérisée en ce qu'**elle comprend un seul fond (54, 60) de partie creuse (44) ayant un rayon déterminé tel que décrit ci-dessus, et un cordon d'équilibrage en rotation, usinable pour le rattrapage du balourd crée par ce fond (54, 60) de partie creuse (44).

6. Assemblage selon l'une des revendications 1 à 4, **caractérisée en ce qu'**elle comprend plusieurs fonds (54, 60) de partie creuse (44) ayant un rayon déterminé tel que décrit ci-dessus, ces fonds (54, 60) étant régulièrement répartis sur la circonférence interne ou externe de la bride (38).

7. Turbomachine, telle qu'un turboréacteur ou un turbopropulseur, **caractérisée en ce qu'**elle comprend un assemblage d'éléments de rotor ou de stator selon l'une des revendications 1 à 6.

## Claims

1. An assembly of rotor or stator elements of a turbomachine, the assembly including at least two radial annular flanges having, on an inner/outer periphery, alternating solid portions (48) and hollow (44) portions, the solid portions (48) including orifices (52) for passing bolts for fastening one flange on the other flange, **characterized in that** at least one of the flanges includes angular keying means constituted by the bottom (54, 60) of at least one hollow portion (44) of the inner/outer periphery having a radius relative to the axis of the turbomachine (10) that is less/greater than the radius of a circle (56, 62) tangential to the outsides/insides of the orifices (52) for passing bolts through the solid portions (48), so as to oppose passing a fastener bolt through said solid portion and thus ensure that the flange is fastened to another flange in a correct angular position.

2. An assembly according to claim 1, **characterized in that** the bottom (54, 60) of smaller/greater radius extends over the entire interval between two solid portions (48).

3. An assembly according to claim 1 or 2, **characterized in that** the radius of the bottom (54, 60) of at least one hollow portion lies between the radius of a circle (58, 62) that is tangential to the insides of the orifices (52) in the solid portions (48) and the radius of a circle (56, 64) that is tangential to the outsides of the orifices (52) in the solid portions (48).

4. An assembly according to one of the claims 1 to 3, **characterized in that** the radius of the bottom (54, 60) of at least one hollow portion (44) is about 10% less/greater than the radius of the circle (56, 62) that is tangential to the outsides/insides of the orifices (52) of the solid portions (48).

5. An assembly according to one of the claims 1 to 4, **characterized in that** it comprises a single bottom (54, 60) of a hollow portion (44) with a radius as described above, and a bead for rotary balancing, the bead being machineable to compensate the unbalance created by said bottom (54, 60) of the hollow portion (44).

6. An assembly according to one of the claims 1 to 4, **characterized in that** it comprises a plurality of bottoms (54, 60) of hollow portions (44) with a radius determined as described above, said bottoms (54, 60) being regularly distributed around the inner/outer circumference of the flange (38).

7. A turbomachine such as a turbojet or a turboprop, including an assembly of rotor or stator elements according to one of the preceding claims 1 to 6.

## Patentansprüche

1. Verbindung von Rotor- bzw. Statorelementen einer Turbo- bzw. Strömungsmaschine, enthaltend zumindest zwei radial verlaufende ringförmige Flansche, die an einem Innen- bzw. Außenumfang eine Wechselfolge von voll ausgeführten Teilen (48) und hohl ausgeführten Teilen (44) aufweisen, wobei die Vollteile (48) Bohrungen (52) für den Durchtritt von Befestigungsbolzen zum Befestigen des einen Flansches an dem anderen Flansch aufweisen, **dadurch gekennzeichnet, dass** zumindest der eine Flansch Mittel zur unverwechselbaren Winkelkennzeichnung aufweist, die aus dem Boden (54, 60) zumindest eines Hohlteils (44) des Innen- bzw. Außenumfangs bestehen, dessen Radius bezüglich der Achse der Turbomaschine (10) kleiner bzw. größer als der Radius eines Kreises (56, 62) ist, der außen bzw. innen die Bohrungen (52) der Vollteile (48) für den Durchtritt der Bolzen tangiert, um dem Durchtritt eines Befestigungsbolzens in diesem Hohlteil entgegenzuwirken und die Befestigung des Flansches an einem anderen Flansch in einer korrekten Winkelstellung zu gewährleisten.

2. Verbindung nach Anspruch 1, **dadurch gekennzeichnet, dass** der Boden (54, 60) mit dem kleineren bzw. größeren Radius sich über den gesamten Zwischenraum zwischen zwei Vollteilen (48) erstreckt.

3. Verbindung nach Anspruch 1 oder 2, **dadurch gekennzeichnet, dass** der Radius des Bodens (54, 60) zumindest eines Hohlteils zwischen dem Radius eines Kreises (58, 62), der die Bohrungen (52) der Vollteile (48) innen tangiert, und dem Radius eines Kreises (56, 64) liegt, der die Bohrungen (52) der Vollteile (48) außen tangiert.

4. Verbindung nach einem der Ansprüche 1 bis 3, **dadurch gekennzeichnet, dass** der Radius des Bodens (54, 60) zumindest eines Hohlteils (44) um etwa 10 % kleiner bzw. größer als der Radius des Kreises (56, 62) ist, der die Bohrungen (52) der Vollteile (48) außen bzw. innen tangiert.

5. Verbindung nach einem der Ansprüche 1 bis 4, **dadurch gekennzeichnet, dass** sie einen einzigen Boden (54, 60) des Hohlteils (44) mit einem Radius, der wie oben beschrieben bestimmt ist, sowie einen rotierenden Auswuchtstrang aufweist, der für die Kompensation der durch diesen Boden (54, 60) des Hohlteils (44) verursachten Unwucht bearbeitet werden kann.

6. Verbindung nach einem der Ansprüche 1 bis 4, **dadurch gekennzeichnet, dass** sie mehrere Böden (54, 60) von Hohlteilen (44) mit einem Radius aufweist, der wie oben beschrieben bestimmt ist, wobei diese Böden (54, 60) gleichmäßig über den Innen- bzw. Außenumfang des Flansches (38) verteilt sind.

7. Turbo- bzw. Strömungsmaschine, wie etwa ein Turbostrahltriebwerk bzw. Turbopropellertriebwerk, **dadurch gekennzeichnet, dass** sie eine Verbindung von Rotor- bzw. Statorelementen nach einem der Ansprüche 1 bis 6 aufweist.
